# EUROPÄISCHE PATENTSCHRIFT

(11) **EP 2 854 922 B1**
(45) Veröffentlichungstag und Bekanntmachung des Hinweises auf die Patenterteilung: **31.01.2018**
(21) Anmeldenummer: 13728138.2
(22) Anmeldetag: 31.05.2013
(51) Int. Cl.: A61M 16/10, B01D 53/22, C01B 13/02

(54) **VORRICHTUNG ZUR SAUERSTOFFANREICHERUNG VON ATEMLUFT**
DEVICE FOR THE OXYGEN-ENRICHMENT OF RESPIRATORY AIR
DISPOSITIF D'ENRICHISSEMENT EN OXYGÈNE DE L'AIR INHALÉ

(30) Priorität: 01.06.2012 DE 102012104776
(43) Veröffentlichungstag der Anmeldung: 08.04.2015
(73) Patentinhaber: Krinner Drucklufttechnik GmbH, 85662 Hohenbrunn (DE)
(72) Erfinder: KRINNER, August, 85662 Hohenbrunn (DE)
(74) Vertreter: Wachenhausen & Kollegen Patentanwälte GbR
(86) Internationale Anmeldenummer: PCT/EP2013/061327
(87) Internationale Veröffentlichungsnummer: WO 2013/178814

(56) Entgegenhaltungen:
- EP-A2- 1 258 279
- US-A- 5 837 032
- US-A1- 2002 192 135

## Beschreibung

Die vorliegende Erfindung betrifft eine Vorrichtung zur Sauerstoffanreicherung von Atemluft sowie ein Verfahren zum Bereitstellen sauerstoffangereicherter Atemluft.

Insbesondere bezieht sich die vorliegende Erfindung auf eine neuartige Vorrichtung zur Sauerstoffanreicherung von Atemluft, die zur Befüllung von Tauchgasflaschen verwendbar ist.

Sauerstoffangereicherte Atemluft wird benötigt, um beispielsweise Tauchflaschen zu befüllen. Derartige als NITROX bezeichnete sauerstoffangereicherte Atemluft wird komprimiert in Tauchflaschen gepresst und für Tauchgänge verwendet. Die Vorteile der Nutzung von sauerstoffangereicherter Atemluft sind bekannt. Insbesondere ist sauerstoffangereicherte Atemluft mit einem Sauerstoffgehalt von 32 bis 40 Vol.-% besonders vorteilhaft.

Sauerstoffangereicherte Atemluft kann durch Mischen von Stickstoff oder Helium mit dem entsprechenden Sauerstoffanteil bereitgestellt werden. Diese Art der Herstellung ist technisch und ökonomisch aufwendig, da reiner Sauerstoff bzw. reiner Stickstoff in Atemgasqualität in Druckbehältern zur Verfügung gestellt werden müssen. Beispiele für Vorrichtungen nach dem Stand der Technik sind in US 2002/192135 A1, EP 1 258 279 A2 und US 5 837 932 A offenbart.

### ZUSAMMENFASSUNG DER ERFINDUNG

Gemäß dem Grundkonzept der vorliegenden Erfindung ist eine Vorrichtung zur Sauerstoffanreicherung von Atemluft vorgesehen, die die folgenden Elemente aufweist:
- Einen Eintritt für verdichtete Umgebungsluft, an den ein Verdichter zur Bereitstellung von verdichteter Umgebungsluft anschließbar ist;
- einen Kältetrockner zur Entfeuchtung der verdichteten Umgebungsluft;
- eine Trennvorrichtung mit einem Eingang für die verdichtete und entfeuchtete Umgebungsluft, einem ersten Ausgang, der direkt mit dem Eingang in Verbindung steht, und einem zweiten Ausgang, der über eine selektive Membran mit dem Eingang in Verbindung steht, wobei die Durchlässigkeit der selektiven Membran unter bestimmten Bedingungen für Sauerstoff höher als für Stickstoff ist.

Erfindungsgemäß ist im Strömungsverlauf zwischen dem Kältetrockner und dem Eingang der Trennvorrichtung eine Heizvorrichtung zum Aufheizen der verdichteten und entfeuchteten Umgebungsluft vorhanden, wobei im Strömungsverlauf zwischen dem Eingang der Trennvorrichtung und dem Kältetrockner, insbesondere im Strömungsverlauf zwischen der Heizvorrichtung und dem Kältetrockner, eine Filtereinrichtung zur Reinigung der verdichteten und entfeuchteten Umgebungsluft vorhanden ist. Erfindungsgemäß ist in der Verbindung zwischen dem Kältetrockner und der Filtereinrichtung eine Abblaseinrichtung vorhanden, die bei Überschreiten eines vorbestimmten Drucks öffnet.

Die erfindungsgemäße Vorrichtung zur Sauerstoffanreicherung von Atemluft soll unabhängig von schwankenden Umgebungsbedingungen, insbesondere der Umgebungstemperatur sowie der Luftfeuchtigkeit zuverlässig betrieben werden können. Aufgrund der Anordnung einer Heizvorrichtung zum Aufheizen der verdichteten und entfeuchteten Umgebungsluft, die nach dem Aufheizen zu der selektiven Membran zugeführt wird, kann überraschend der Wirkungsgrad der Vorrichtung zur Sauerstoffanreicherung erheblich erhöht werden. Zusätzlich kann die Zuverlässigkeit der Vorrichtung verbessert werden, da die verdichtete und entfeuchtete Umgebungsluft, die in die selektive Membran eingeleitet wird, auf eine definierte Temperatur geheizt wird.

Gemäß einer weiteren Ausführungsform der vorliegenden Erfindung ist im Strömungsverlauf zwischen dem Eintritt für verdichtete Umgebungsluft und dem Kältetrockner eine Vorkühleinrichtung zum Kühlen der verdichteten Umgebungsluft vorgesehen.

Durch diese Maßnahme wird sichergestellt, dass der Kältetrockner in einem bevorzugten Betriebsbereich betrieben werden kann, da die komprimierte Luft, die dem Kältetrockner zugeführt wird, auf einer definierten Temperatur gehalten werden kann. Hierdurch wird verhindert, dass der Kältetrockner außerhalb des Leistungsbereichs, insbesondere durch Überschreiten des Taupunkts, betrieben wird.

Durch die definierte Temperatureinstellung dieser Ausführungsform kann die Zuverlässigkeit weiter erhöht werden und kann insbesondere der Wirkungsgrad des Gesamtsystems weiter optimiert werden.

Gemäß einer weiteren Ausführungsform der vorhegenden Erfindung ist mit der Vorkühleinrichtung die verdichtete Umgebungsluft unterhalb einer vorbestimmten Grenztemperatur regelbar oder steuerbar. Damit wird sichergestellt, dass die Vorkühleinrichtung die verdichtete Umgebungsluft unterhalb eines Grenztemperaturbereichs regelt bzw. steuert, die für die Funktion des Kältetrockners optimal ist und die Betriebssicherheit erhöht.

Gemäß einer weiteren Ausführungsform der Erfindung ist die vorbestimmte Grenztemperatur auf der Grundlage von Betriebsgrößen des Kältetrockners vorgebbar. Insbesondere werden Betriebsgrößen des Kältetrockners beispielsweise durch die Sensorik oder durch vorgegebene Auslegungsgrößen des Kältetrockners verwendet, um die Kühlleistung der Vorkühleinrichtung so einzustellen, dass der Betrieb des Kältetrockners optimiert werden kann.

Gemäß einer weiteren Ausführungsform der vorhegenden Erfindung ist mit der Heizvorrichtung die verdichtete und entfeuchtete Umgebungsluft am Eingang der Trennvorrichtung auf eine vorbestimmte Temperatur oder innerhalb eines vorbestimmten Temperaturbereichs regelbar. Die Heizvorrichtung stellt somit die Temperatur der verdichteten und entfeuchteten Umgebungsluft so ein, dass einerseits ein optimaler Betrieb des Gesamtsystems ermöglicht wird und andererseits der Wirkungsgrad maximiert werden kann.

Gemäß einer weiteren Ausführungsform der vorhegenden Erfindung beträgt der vorbestimmte Temperaturbereich für die verdichtete und entfeuchtete Umgebungsluft am Eingang der Trennvorrichtung 20-50°C, vorzugsweise 40°C ± 2K. Es hat sich herausgestellt, dass die Erhöhung der Temperatur ausgehend von der Nenntemperatur von 20°C auf einen Bereich von bis zu 50°C eine Erhöhung des Gesamtwirkungsgrads der Vorrichtung zur Folge hat. Vorzugsweise wird die Temperatur im Bereich von 40°C ± 2K gehalten, da in diesem Bereich der Wirkungsgrad besonders hoch ist und gleichzeitig eine Beschädigung der selektiven Membran durch zu hohe Temperatur vermieden wird. Als besonders vorteilhaft hat sich die Temperatur von 40°C ± 2K gezeigt.

Gemäß einer weiteren Ausführungsform der vorliegenden Erfindung ist die Heizvorrichtung elektrisch betreibbar. Eine solche Heizvorrichtung kann einfach geregelt werden, ist betriebssicher und kostengünstig.

Gemäß einer weiteren Ausführungsform der vorliegenden Erfindung ist die Heizvorrichtung unter Nutzung der Abwärme des Kältetrockners betreibbar. In dieser Ausführungsform wird der Wirkungsgrad weitergehend angehoben, da die Abwärme des Kältetrockners, die unvermeidlich anfallt, nicht ungenutzt in die Umgebungsluft abgeführt wird.

Gemäß einer weiteren Ausführungsform der vorliegenden Erfindung ist die Vorkühleinrichtung als Luft-/Wasser- Wärmetauscher, insbesondere als Luft-/Wasser-Rohrbündelwärmetauscher ausgebildet. Derartige Systeme haben eine hohe Effizienz und eine ausgeprägte Betriebssicherheit. Ferner sind diese Systeme kostengünstig herzustellen und wartungsarm.

Gemäß der vorliegenden Erfindung ist im Strömungsverlauf zwischen dem Eingang der Trennvorrichtung und dem Kältetrockner, insbesondere im Strömungsverlauf zwischen der Heizvorrichtung und dem Kältetrockner, eine Filtereinrichtung zur Reinigung der verdichteten und entfeuchteten Umgebungsluft vorhanden. Diese Filtereinrichtung ist wirksam zum Entfernen von Fremdstoffen, wie Staub oder andere Verunreinigungen aus der verdichteten und entfeuchteten Umgebungsluft, so dass die im Strömungsverlauf nach der Filtereinrichtung angeordneten Elemente nicht beschädigt werden. Insbesondere wird die selektive Membran durch Verunreinigungen nicht beschädigt. Insgesamt wir durch die Filtereinrichtung die Lebensdauer und Zuverlässigkeit des Gesamtsystems verbessert.

Gemäß einer weiteren Ausführungsform umfasst die Filtereinrichtung mehrere Filtereinheiten, die im Strömungsverlauf in Reihe angeordnet sind. Die mehreren Filtereinheiten können mit entsprechenden Eigenschaften eingerichtet werden, so dass die Reinigung der verdichteten und entfeuchteten Umgebungsluft optimal vorgenommen werden kann.

Gemäß einer weiteren Ausführungsform der vorliegenden Erfindung weist die Filtereinrichtung mindestens eine Filtereinheit auf, die Aktivkohle, vorzugsweise eine Aktivkohleschüttung enthält, durch die die verdichtete und entfeuchtete Umgebungsluft einer Reinigung unterzogen werden kann. Aktivkohle hat eine große Oberfläche bezogen auf das Volumen und hat eine hohe Reinigungsfähigkeit. Die Aktivkohle kann auf ein Filtervlies aufgetragen sein. Besonders vorteilhaft ist in der vorliegenden Anwendung Aktivkohle als Schüttung. Die Durchleitung von verdichteter Umgebungsluft durch die Aktivkohle ist in dieser Konfiguration besonders vorteilhaft, da hierdurch die Strömungsgeschwindigkeiten in der Filtereinheit im Vergleich mit entspannter Umgebungsluft verringert sind.

Gemäß einer weiteren Ausführungsform der vorliegenden Erfindung ist eine Druckeinstellvorrichtung, mit der der Druck am Eingang der Trennvorrichtung einstellbar, insbesondere begrenzbar ist, im Strömungsverlauf hinter der Filtereinrichtung vorgesehen. Durch die Anordnung der Druckeinstellvorrichtung kann der Druck auf einen geeigneten Druck unter Berücksichtigung der Erfordernisse der Trennvorrichtung eingestellt werden. Besonders vorteilhaft ist die Anordnung hinter der Filtereinrichtung, da hierdurch die Strömungsgeschwindigkeit in der Filtereinrichtung, insbesondere der Filtereinheit in der Aktivkohle vorgesehen werden kann, im Vergleich mit entspannter Umgebungsluft verringert ist und dadurch ein Austrag der Aktivkohle vermieden werden kann.

Gemäß einer weiteren Ausführungsform der vorliegenden Erfindung ist die Druckeinstellvorrichtung zwischen der Filtereinrichtung und der Heizvorrichtung vorgesehen. Durch diese Konfiguration wird bewirkt, dass die Strömungsgeschwindigkeit in der Heizvorrichtung höher als bei entspannter Umgebungsluft ist, so dass der Wärmeübergang zwischen dem Heizelement der Heizvorrichtung verbessert werden kann. Mit dieser Konfiguration kann die Heizvorrichtung effizienter als bei druckbeaufschlagter Umgebungsluft die erforderliche Wärmemenge auf die Umgebungsluft übertragen.

Gemäß der vorliegenden Erfindung ist in der Verbindung zwischen dem Kältetrockner und der Filtereinrichtung eine Abblaseinrichtung vorhanden, die bei Überschreiten eines vorbestimmten Drucks öffnet, um intermittierende Betriebszustände des an den Eintritt anschließbaren Verdichters zu vermindern oder zu vermeiden. Hierbei wird in Kauf genommen, dass gewisse Energieverluste durch den Abblasvorgang auftreten, wird jedoch die Betriebssicherheit und die Lebensdauer des anschließbaren Verdichters erhöht, indem intermittierende Betriebsweisen verhindert werden.

Gemäß einer weiteren Ausführungsform der vorliegenden Erfindung ist eine Befüllvorrichtung zur Befüllung von Atemluftbehältern, insbesondere von Tauchflaschen mit der sauerstoffangereicherten Atemluft unter Druck vorgesehen. Diese Befüllvorrichtung ist vorzugsweise angepasst an die Atemluftbehälter und ist geeignet, die Atemluftbehälter mit der sauerstoffangereicherten Atemluft unter Druck zu befüllen. Hierzu kann ein zusätzlicher Verdichter angewendet werden, falls dies erforderlich ist.

Gemäß einer weiteren Ausführungsform der vorliegenden Erfindung ist die Vorrichtung modular als Einheit aufgebaut und ist an die Vorrichtung der Verdichter zur Bereitstellung von verdichteter Umgebungsluft anschließbar. Die modular als Einheit aufgebaute Vorrichtung ist besonders vorteilhaft, so dass diese am Anwendungsort installiert werden kann, wobei mit Ausnahme des Anschlusses des Verdichters zur Bereitstellung von verdichteter Umgebungsluft Einzelelemente zur Bereitstellung der gewünschten Funktion nicht gesondert miteinander verbunden werden oder anderweitig eingerichtet müssen.

Gemäß einer weiteren Ausführungsform der vorliegenden Erfindung ist die Einheit in einem Gehäuse untergebracht. Diese Ausführungsform stellt somit ein neuartiges vereinheitlichtes Modul zur Verfügung, an welches lediglich der Verdichter angeschlossen werden muss. Die Montage verschiedener Elemente fällt weg und die Einfassung in einem gemeinsamen Gehäuse vereinfacht die Anwendung der Vorrichtung.

Gemäß einer weiteren Ausführungsform der vorliegenden Erfindung ist diese in einem System mit einem Verdichter zur Bereitstellung von verdichteter Umgebungsluft versehen. Dieser Verdichter ist an den Eintritt für verdichtete Umgebungsluft der Vorrichtung anschließbar. In diesem Zusammenhang ist es möglich, die Vorrichtung mit dem Verdichter auszustatten, der optional ebenfalls Teil des Moduls ist, das ferner optional in einem gemeinsamen Gehäuse untergebracht ist.

Gemäß einem weiteren Gesichtspunkt der vorliegenden Erfindung wird ein Verfahren zum Bereitstellen von sauerstoffangereicherter Atemluft unter Verwendung der vorstehend dargestellten Vorrichtung mit den folgenden Schritten zur Verfügung gestellt:
- Bereitstellen von verdichteter Umgebungsluft;
- Entfeuchten der verdichteten Umgebungsluft;
- Einleiten der verdichteten und entfeuchteten Umgebungsluft in eine Trennvorrichtung, die mit einer selektiven Membran versehen ist;
- Ableiten von sauerstoffangereicherter Atemluft aus der Trennvorrichtung, wobei ferner ein Schritt des Vorheizens der entfeuchteten und verdichteten Umgebungsluft vor dem Einleiten in die Trennvorrichtung vorgesehen ist.

Mit dem Verfahren, das vorstehend definiert ist, werden dieselben Vorteile erzielt, die mit der vorstehend genannten Vorrichtung erzielbar sind.

Gemäß einer weiteren Ausführungsform der vorliegenden Erfindung wird die verdichtete Umgebungsluft vor dem Entfeuchten mit einem Vorkühler vorgekühlt.

Gemäß einer weiteren Ausführungsform der vorliegenden Erfindung wird das Entfeuchten durch einen Kältetrockner vorgenommen.

Gemäß einer weiteren Ausführungsform der vorliegenden Erfindung wird vor dem Einleiten der verdichteten und entfeuchteten Umgebungsluft in die Trennvorrichtung die verdichtete und entfeuchtete Umgebungsluft filtriert.

Gemäß einer weiteren Ausführungsform der vorliegenden Erfindung wird nach dem Filtrieren und vor dem Vorheizen ein Schritt zur Druckverringerung der verdichteten und entfeuchteten Umgebungsluft durchgeführt.

Gemäß einer weiteren Ausführungsform der vorliegenden Erfindung ist ferner ein Schritt zum Befüllen von Atemluftbehältern, insbesondere von Tauchflaschen mit der abgeleiteten sauerstoffangereicherten Atemluft unter Druck vorgesehen.

### KURZBESCHREIBUNG DER ZEICHNUNGEN

Fig. 1 zeigt schematisch den Aufbau der Vorrichtung zur Sauerstoffanreicherung gemäß einem ersten Ausführungsbeispiel.
Fig. 2 zeigt schematisch den Aufbau der Vorrichtung zur Sauerstoffanreicherung gemäß einem zweiten Ausführungsbeispiel.
Fig. 3 - Fig. 5 zeigen Diagramme, die Luftverbrauchswerte bei der Erzeugung von sauerstoffangereicherter Atemluft mit der erfindungsgemäßen Erfindung und mit einer Vorrichtung nach dem Stand der Technik vergleichen, wobei die Eintrittstemperatur an der Membran 20°C beträgt.
Fig. 6 - Fig. 8 zeigen Diagramme, die Luftverbrauchswerte bei der Erzeugung von sauerstoffangereicherter Atemluft mit der erfindungsgemäßen Erfindung und mit einer Vorrichtung nach dem Stand der Technik vergleichen, wobei die Eintrittstemperatur an der Membran 40°C beträgt.

Im Folgenden werden Ausführungsbeispiele unter Bezugnahme auf die Zeichnungen erläutert.

### ERSTES AUSFÜHRUNGSBEISPIEL

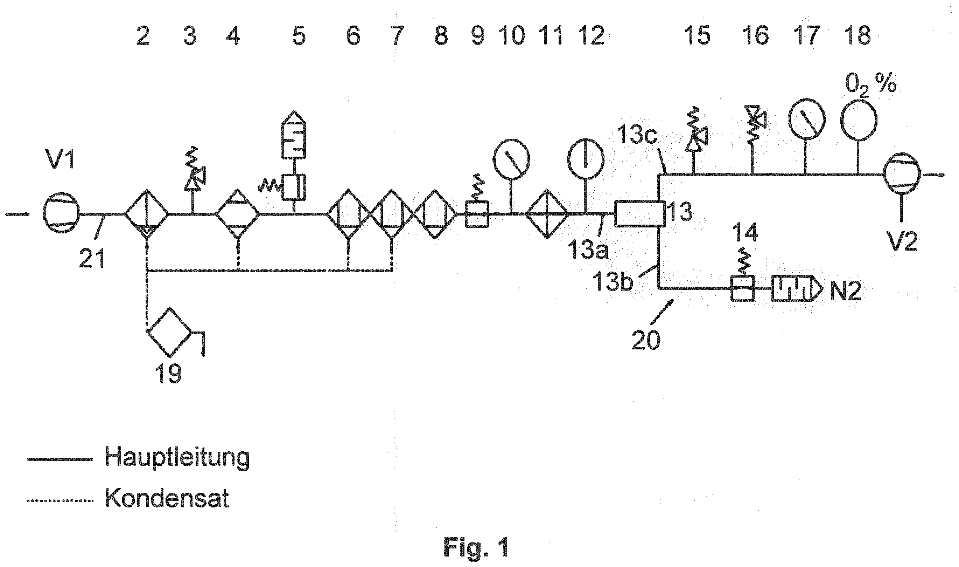

Ein erstes Ausführungsbeispiel der vorliegenden Erfindung wird unter Bezugnahme auf Fig. 1 beschrieben. Fig. 1 ist ein schematisches Diagramm, das den Aufbau der Vorrichtung zur Sauerstoffanreicherung gemäß dem ersten Ausführungsbeispiel zeigt. Zunächst wird der grundlegende Aufbau der Vorrichtung anhand der Darstellung in Fig. 1 erläutert.

Die in Fig. 1 dargestellte Vorrichtung zur Sauerstoffanreicherung weist einen Eintritt 21 für verdichtete Umgebungsluft auf. An diesem Eintritt 21 für verdichtete Umgebungsluft kann ein Verdichter V1 angeschlossen werden, der vorgegebene Eigenschaften hat. Diese Eigenschaften umfassen den Nenndruck sowie die Durchsatzleistung der verdichteten Luft. An den Eintritt 21 für verdichtete Umgebungsluft kann der Verdichter V1 mit üblichen, insbesondere genormten Anschlüssen angeschlossen werden. In Strömungsrichtung nach dem Eintritt 21 für verdichtete Umgebungsluft ist eine Filtereinrichtung 2 mit einem elektronischen Kondensatsableiter vorgesehen. Die Filtereinrichtung 2 ist eingerichtet, um Feststoffe und andere Fremdstoffe, wie Flüssigkeiten aus der verdichteten Umgebungsluft zu filtern und aus der Strömung abzuführen. Die abgeführten Feststoffe sowie Flüssigkeiten in der Form des Kondensats können einem Kondensatabscheider zugeführt werden, der in Fig. 1 mit dem Bezugszeichen 19 bezeichnet ist.

In Strömungsrichtung nach der Filtereinrichtung 2 ist ein Sicherheitsventil 3 vorgesehen, das bei Überschreiten eines eingestellten Drucks öffnet und die verdichtete Luft in die Umgebung abbläst. Beispielsweise kann das Sicherheitsventil mit einem Öffnungsdruck von 11 bar eingerichtet werden. In Strömungsrichtung nach den Sicherheitsventil 3 ist ein Kältetrockner 4 mit einem integrierten Kondensatableiter vorgesehen. Das abgeleitete Kondensat wird dem Sammelbehälter 19 zugeführt. Der Kältetrockner 4 kühlt die eintretende verdichtete Umgebungsluft soweit ab, dass durch Unterschreiten des Taupunkts das in der Luft enthaltene Wasser ausfällt und somit aus der Luft entfernt werden kann.

An der Leitung in Strömungsrichtung nach dem Kältetrockner 4 ist ein Überströmventil 5 angeschlossen. Dieses Überströmventil 5 ist in dem in Fig. 1 gezeigten Beispiel mit einem Schalldämpfer versehen. Die Funktion des Überströmventils 5 steht im Zusammenhang mit der Funktionsweise des anzuschließenden Verdichters V1. Ein Verdichter baut im Allgemeinen nach Inbetriebnahme einen vorgegebenen Druck auf. Bei Erreichen des vorgegebenen Drucks schaltet der Verdichter ab, bis der Druck nach erneuter Entnahme verdichteter Luft in Betrieb gesetzt wird. Durch diese Einrichtung kann unter gewissen Umständen bewirkt werden, dass ein angeschlossener Verdichter intermittierend betrieben wird, da seine Durchsatzleistung deutlich höher ist als die angeforderte Durchsatzleistung der Vorrichtung zur Sauerstoffanreicherung, die in Fig. 1 dargestellt ist. Durch das Überströmventil 5 wird bewirkt, dass der intermittierende Betrieb des angeschlossenen Verdichters V1 vermieden wird und vielmehr die verdichtete Umgebungsluft an die Umgebung abgegeben wird. Unter Inkaufnahme eines geringfügig verringerten Wirkungsgrads kann dadurch die Lebensdauer des Verdichters erhöht werden, indem intermittierende Betriebssituationen vermieden werden.

In Strömungsrichtung nach dem Überströmventil 5 ist eine Filterkaskade vorgesehen. In dem in Fig. 1 gezeigten Ausführungsbeispiel besteht die Filterkaskade aus drei Filterelementen 6, 7, 8. Die Filterelemente sind im Ausführungsbeispiel in Fig. 1 bezogenen auf die Strömungsrichtung in Reihe angeordnet. Dabei kann die Filterung durch die drei in Reihe geschalteten Filterelemente stufenweise durchgeführt werden. In dem ersten Filterelement 6 kann somit eine grobe Vorfilterung vorgenommen werden. In dem darauffolgenden Filterelement 7 kann eine feinere Filterung durchgeführt werden. In den daran anschließenden Filterelement 8 kann eine abschließende höchstfeine Filterung vorgenommen werden. In einem bevorzugten Ausführungsbeispiel ist das Filterelement 8 als Aktivkohlefilter ausgebildet. Dieser Aktivkohlefilter kann bevorzugt eine Aktivkohleschüttung aufweisen, welche eine große Oberfläche bereitstellt und somit eine hervorragende Filterleistung aufweist. Zusätzlich zu der enthaltenen Aktivkohleschüttung kann das Filterelement 8 ein Vlies oder Ähnliches aufweisen, um einen Austrag der Aktivkohleschüttung zu vermeiden.

Anschließend an die in Reihe geschalteten Filterelemente 6, 7, 8 ist ein Druckreduzierventil 9 vorgesehen. Dieses Druckreduzierventil 9 kann einstellbar sein und bewirkt, dass ein vorgegebener Ausgangsdruck am Ausgang des Druckreduzierventils 9 beibehalten wird. Dieser Druck kann durch ein Druckmessgerät 10 überwacht werden, das den Druck in Strömungsrichtung hinter dem Druckreduzierventil 9 erfasst.

Anschließend an das Druckreduzierventil 9 ist eine Druckluftheizung 11 vorgesehen. In dem vorliegenden Ausführungsbeispiel ist die Druckluftheizung 11 eine elektrische Heizung mit einem elektrischen Heizelement. Das Heizelement kann bevorzugt über einen Regler geregelt werden. Mit dieser Regelung wird die Ausgangstemperatur am Austritt der Druckluftheizung 11 auf eine vorgegebene Temperatur geregelt. Jedoch ist es auch möglich, eine Steuerung vorzusehen, solange die Austrittstemperatur der durch die Druckluftheizung 11 aufgeheizten Druckluft auf einen vorbestimmten Bereich eingestellt werden kann. Die Temperatur der Druckluft am Austritt der Druckluftheizung 11 wird durch ein Thermometer 12 überwacht.

Angeschlossenen an den Austritt der Druckluftheizung 11 ist eine Trennvorrichtung 20, die im Folgenden näher erläutert wird.

Wie in Fig. 1 gezeigt ist, weist die Trennvorrichtung 20 einen Eingang 13a für die verdichtete und entfeuchtete Umgebungsluft, einen ersten Ausgang 13b, der direkt mit dem Eingang in Verbindung steht, und einen zweiten Ausgang 13c auf, der über eine Membran 13 mit dem Eingang 13a in Verbindung steht. Da die Durchlässigkeit der selektiven Membran 13 unter vorbestimmten Bedingungen für Sauerstoff höher als für Stickstoff ist, wird am zweiten Ausgang 13c ein Gasgemisch mit einem gegenüber Luft erhöhten Sauerstoffgehalt zur Verfügung gestellt, während am ersten Ausgang 13b überwiegend Stickstoff abgeführt wird. Die vorbestimmten Bedingungen für die selektive Permeabilität der Membran 13 umfassen den Druck und die Temperatur der eintretenden verdichteten Umgebungsluft.

Die hier verwendete Membran ist eine Hohlstruktur, die aus einem Faserbündel besteht. Die Hohlfasern bestehen wiederum aus einer Polymerstruktur und sind von der Membran als Schicht an der Außenseite umschlossen. Die Hohlfasern sind in ein Modulgehäuse (nicht gezeigt) eingeklebt oder anderweitig eingebracht. Die Gasseparation, die entscheidend für die Funktion der Vorrichtung zur Sauerstoffanreicherung der vorliegenden Erfindung ist, basiert auf der unterschiedlichen Permeabilität: Luft dringt am Einlass ein, Stickstoff und Sauerstoff treten am Auslass aus. Dem Fachmann ist die Funktionsweise dieser Membran bekannt. Daher wird auf eine ausführliche Beschreibung der Membran verzichtet. Lediglich die erhöhte Durchlässigkeit für Sauerstoff gegenüber Stickstoff unter Druck und bei bestimmten Temperaturen sind als Vorraussetzungen für die verwendete Membran zu nennen.

Derartige selektive Membranen sind empfindlich gegenüber Feuchtigkeit und Verunreinigungen. Ferner weisen die selektiven Membranen eine Leistungsfähigkeit auf, die von Druck und Temperatur der eintretenden verdichteten Umgebungsluft abhängt.

An der Leitung des zweiten Ausgangs 13c ist ein Sicherheitsventil 15 für Überdruck angeschlossen. Dieses Sicherheitsventil 15 öffnet, sobald der Druck einen vorbestimmten Wert übersteigt, um die Vorrichtung vor Überdruck zu schützen.

Ferner ist an der Leitung des zweiten Ausgangs 13c ein Sicherheitsventil 16 für Unterdruck bzw. Vakuum anschlossen. Dieses Sicherheitsventil 16 öffnet, sobald der Druck einen vorbestimmten Wert unterschreitet, um die Vorrichtung von Unterdruck bzw. Vakuum zu schützen. Insbesondere bei Ausfall des Verdichters V1 oder Verstopfung des Systems soll verhindert werden, dass durch Betrieb der später beschriebenen Befüllvorrichtung V2 ein Vakuum erzeugt wird, das die Vorrichtung schädigen könnte.

Außerdem ist an der Leitung des zweiten Ausgangs 13c ein Manometer 17 zum Messen des Drucks im zweiten Ausgang 13c angeschlossen. Mit diesem Manometer 17 kann der Druck innerhalb der Leitung gemessen werden, an dem sauerstoffangereicherte Luft abgeleitet wird. Dieses Manometer 17 weist vorzugsweise einen Messbereich von ±200mbar auf. Abschließend ist an der Leitung des zweiten Ausgangs 13c ein Sauerstoffmessgerät 18 angeschlossen, das den Sauerstoffgehalt der zur Verfügung gestellten sauerstoffangereicherten Atemluft erfassen kann. Am Austritt des zweiten Ausgangs 13c kann eine Befüllvorrichtung V2 angeschlossen werden, die im Wesentlichen einen Verdichter umfasst. Insbesondere wird der Eintritt eines Verdichters an den Austritt des zweiten Ausgangs 13c angeschlossen. Dieser Verdichter nimmt die sauerstoffangereicherte Atemluft auf und leitet diese in einem verdichteten Zustand zur Weiterverarbeitung, insbesondere zur Befüllung von Tauchflaschen oder Ähnlichem, weiter. Optional kann ein 2/2-Wegeventil zwischen dem Verdichter V2 und dem Austritt der Vorrichtung vorgesehen werden. Somit wird gewährleistet, dass der Verdichter V2 auch mit nicht behandelter Umgebungsluft betrieben werden kann, wenn beispielsweise die Vorrichtung außer Betrieb ist. Hierzu muss lediglich das 2/2-Wegeventil umgestellt werden. Die Flexibilität der Vorrichtung wird dadurch weiter verbessert.

Der erste Ausgang 13b weist ein Drosselventil 14 auf. Dieses Drosselventil 14 bewirkt, dass in der Trennvorrichtung 20, insbesondere am Eintritt 13a der Membran 13, ein ausreichender Druck herrscht, der für die Funktion der selektiven Membran 13 geeignet ist. Durch das Drosselventil 14 wird insbesondere bewirkt, dass die verdichtete Umgebungsluft, die in den Eingang 13a der Trennvorrichtung 20 eintritt, mit Druck durch die selektive Membran geleitet werden kann. Am Austritt des Drosselventils 14 kann ein Schalldämpfer vorgesehen werden, über den der hauptsächlich aus Stickstoff bestehende Gasstrom in die Umgebung abgeleitet werden kann.

Der im ersten Ausführungsbeispiel dargestellte Aufbau ist als Einheit integriert, wobei alle dargestellten Elemente mit Ausnahme des an den Eintritt 21 für verdichtete Umgebungsluft anschließbaren Verdichters V1 und des Verdichters der Befüllvorrichtung V2 als Modul vorgesehen sind. Vorzugsweise sind diese Elemente in einem Gehäuse untergebracht. Die in dem Gehäuse untergebrachte Vorrichtung weist somit einen Anschluss am Eintritt 21 für verdichtete Umgebungsluft, einen Anschluss für den Verdichter der Befüllvorrichtung V2 sowie einen Anschluss für elektrische Energie und optional einen Ausgang zur Abfuhr des Kondensats auf, das dem Kondensatabscheider 19 zugeführt wird. Die elektrische Energie wird für die elektrische Heizung, den Kältetrockner, die Regelungstechnik sowie die Messtechnik benötigt.

Der Kondensatabscheider 19 dient der Abscheidung des Kondensats, das bei der Drucklufterzeugung entsteht. In einer besonderen Ausführungsform kann der Kondensatabscheider als Kondensataufbereitungseinrichtung ausgeführt sein. Druckluftkondensat enthält typisch 99% Wasser und 1% Öl. Daher ist die Aufbereitung von besonderer Wichtigkeit. Für die Aufbereitung gelangt das ölhaltige Kondensat zunächst unter Restdruck in eine Druckentlastungskammer. Zusätzliche Eingänge für Niederdruck- und Hochdruckkompressor sind im erfindungsgemäßen System bereits integriert. In der Entlastungskammer wird der restliche Überdruck abgebaut. Freiöl und Partikel werden in einem Trennbehälter abgeschieden und zurückgehalten. Im Trennbehälter setzt sich das Öl durch Schwerkrafttrennung an der Oberfläche ab und wird in den überlaufsicheren Ölauffangbehälter geleitet.

Das so vorgereinigte Kondensat strömt nun durch einen Vorfilter, der eine große aktive Filterfläche aufweist. Von innen nach außen durchströmt, bindet er die verbliebenen Öltröpfchen und nimmt zudem in der Filterkammer restliches, aufschwimmendes Öl auf. Ein Aktivkohle - Hauptfilter ist vorzugsweise in der Kondensataufbereitungseinrichtung vorgesehen. Dort werden letzte Ölanteile zuverlässig zurückgehalten. Übrig bleibt Wasser, das direkt in die Kanalisation eingeleitet werden darf.

Die in Fig. 1 gezeigte Vorrichtung hat die folgenden Vorteile: Die Vorrichtung weist die elektrische Druckluftheizung 11 auf. Mit der elektrischen Druckluftheizung 11 wird die Druckluft am Austritt derselben mithilfe einer Regelung auf eine vorbestimmte Temperatur geregelt. Es hat überraschenderweise herausgestellt, dass die Leistungsfähigkeit der Trennvorrichtung 20 und insbesondere der selektiven Membran 13 besonders empfindlich auf verschiedene Temperaturen der eintretenden Luft reagiert. Da der Zweck der Vorrichtung die Bereitstellung von Atemluft mit einem erhöhten Sauerstoffgehalt ist, soll die Durchsatzmenge, insbesondere der Volumenstrom gemessen in Normliter/min am Austritt 13c besonders hoch sein, während der Volumenstrom der verdichteten Umgebungsluft am Eintritt 21 möglichst niedrig sein soll. Insbesondere ist der Energiebedarf für das Verdichten von Umgebungsluft besonders kritisch, so dass ein Wirkungsgrad herleitbar ist, der sich aus dem bereit gestellten Volumenstrom von mit Sauerstoff angereicherter Umgebungsluft und dem druckbeaufschlagten Volumenstrom der Umgebungsluft am Eintritt der Vorrichtung zusammensetzt.

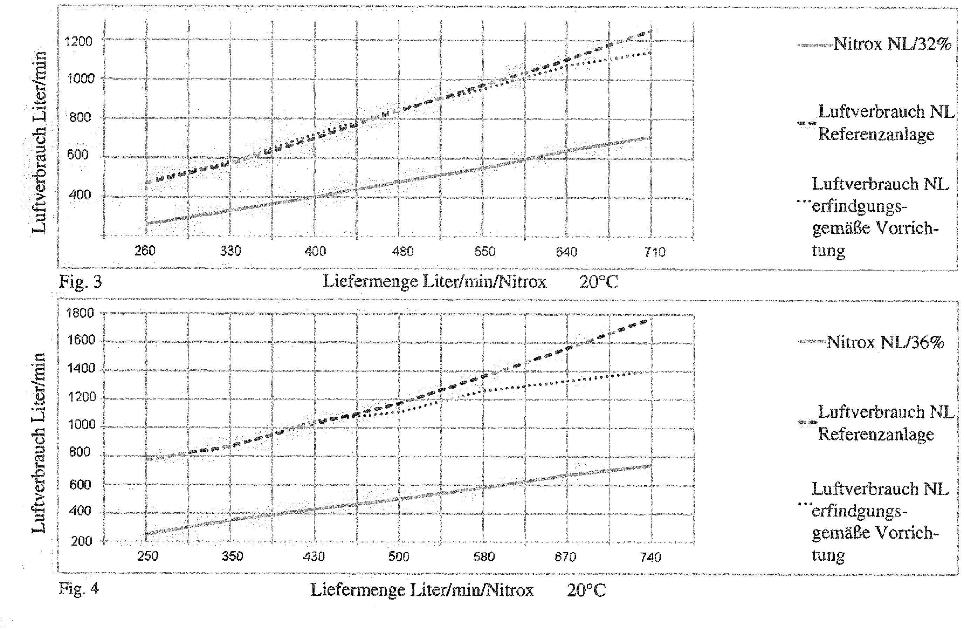

Zur Erläuterung der Vorteile werden Versuchsergebnisse diskutiert, die mit der erfindungsgemäßen Vorrichtung durchgeführt wurden. Dabei zeigen Fig. 3 - Fig. 5 Diagramme, die Luftverbrauchswerte bei der Erzeugung von sauerstoffangereicherter Atemluft mit der erfindungsgemäßen Erfindung und mit einer Vorrichtung nach dem Stand der Technik vergleichen, wobei die Eintrittstemperatur an der Membran 20°C beträgt. Ferner zeigen Fig. 6 - Fig. 8 Diagramme, die Luftverbrauchswerte bei der Erzeugung von sauerstoffangereicherter Atemluft mit der erfindungsgemäßen Erfindung und mit einer Vorrichtung nach dem Stand der Technik vergleichen, wobei die Eintrittstemperatur an der Membran 40°C beträgt.

In allen Diagrammen stellt die horizontale Achse die Liefermenge NITROX in der Einheit Normliter/min dar. Die vertikale Achse in den Diagrammen stellt den Luftverbrauch ebenfalls in der Einheit Normliter/min dar.

Die durchgezogenen Linien in den Figuren zeigen als Referenz den Verlauf der Liefermenge NITROX, wobei der Verlauf im Wesentlichen linear ist. Dieser Verlauf ist in den Diagrammen aufgenommen, um die Auslastung zwischen Niedriglast und Hochlast erkennen zu können.

Die gepunkteten Linien in den Figuren zeigen den Luftverbrauch (Normliter/min) der in Fig. 1 gezeigten Vorrichtung gemäß dem ersten Ausführungsbeispiel der vorliegenden Erfindung bei verschiedenen Auslastungen.

Die gestrichelten Linien in den Figuren stellen den Luftverbrauch (Normliter/min) dar, der mit einer Anlage gemessen wird, die nicht den Aufbau der erfindungsgemäßen Vorrichtung aufweist (im Folgenden als Referenzvorrichtung bezeichnet). Dabei wurde dieselben Randwerte wie Druck, Druckdifferenz über die Membrane und Temperatur zugrunde gelegt, die auch bei der Ermittelung der Werte der erfindungsgemäßen Vorrichtung eingestellt waren. Die Darstellungen der Luftverbrauchswerte sind daher miteinander vergleichbar und insbesondere die Trends sind diesem Diagrammen direkt entnehmbar.

Es ist anzumerken, dass die Darstellung von Fig. 3 sich auf NITROX mit einem Sauerstoffgehalt von 32 % bezieht und eine Eintrittstemperatur am Eintritt der selektiven Membran 13 von 20 °C eingeregelt wurde.

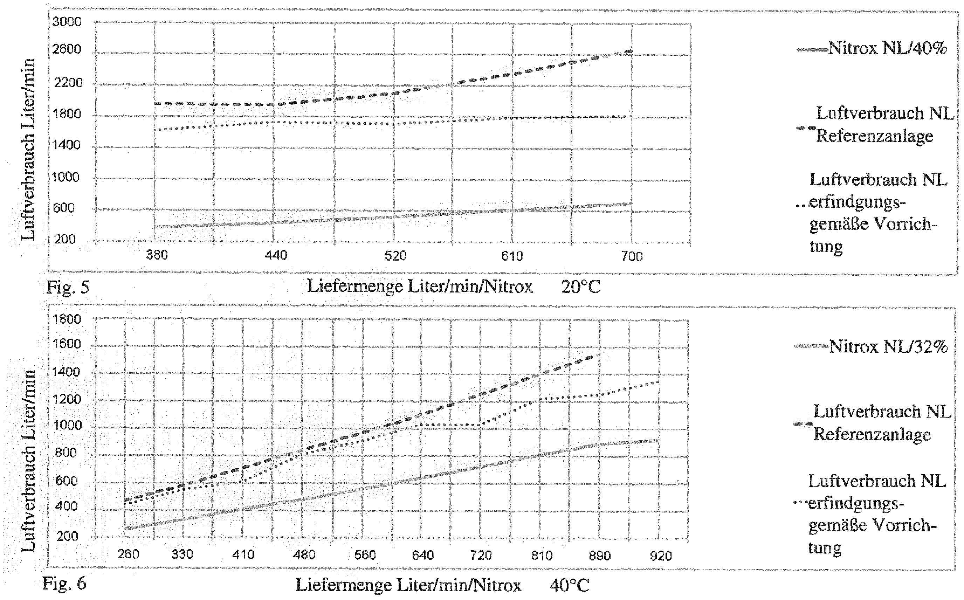

Fig. 4 zeigt einen weiteren Versuch, bei welchem NITROX mit einem Sauerstoffgehalt von 36 % erzeugt wurde. Die Eintrittstemperatur an der selektiven Membran 13 beträgt hier ebenfalls 20°C.

Es zeigt sich, dass bei erhöhtem Sauerstoffgehalt des erzeugten NITROX der Luftverbrauch für die erfindungsgemäße Vorrichtung insbesondere bei hoher Auslastung geringer als der Luftverbrauch der Referenzvorrichtung ist.

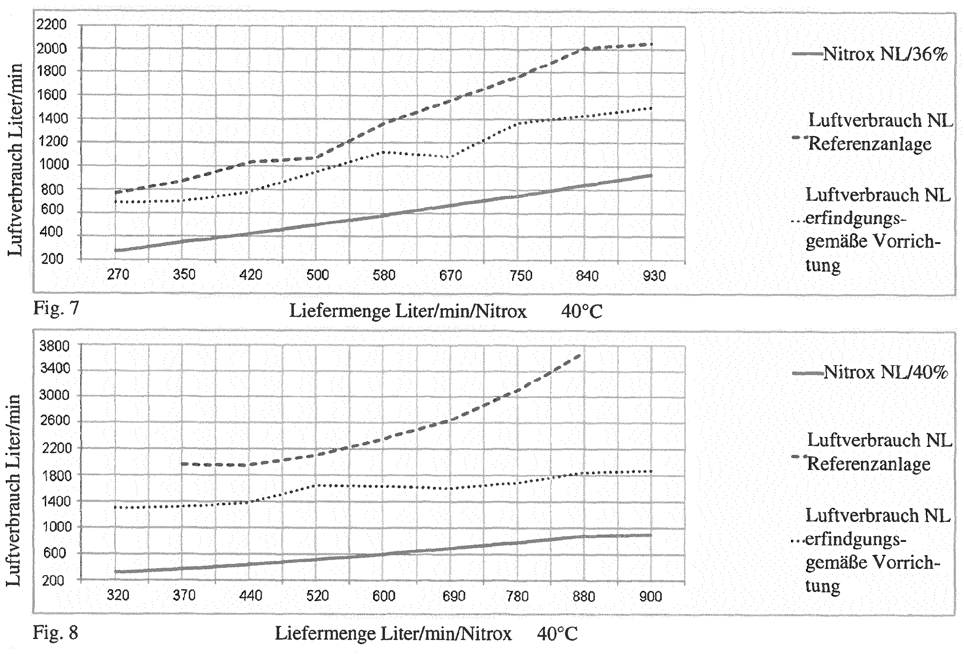

Fig. 5 zeigt eine ähnliche Darstellung, bei welcher der Sauerstoffgehalt des erzeugten NITROX 40 % beträgt und die Eintrittstemperatur an der selektiven Membran 13 ebenfalls auf 20°C eingestellt wurde. Der Unterschied zwischen dem Luftverbrauch der erfindungsgemäßen Vorrichtung und dem Luftverbrauch der Referenzvorrichtung ist hier noch größer.

Eine weitere Versuchsreihe wurde durchgeführt, bei der die Eintrittstemperatur der Luft an der selektiven Membran 13 auf 40°C ± 2K eingestellt wurde.

Fig. 6 zeigt hierzu die Versuchsergebnisse zur Erzeugung von NITROX mit einem Sauerstoffgehalt von 32 % bei einer Eintrittstemperatur von 40 °C. Fig. 7 zeigt die Versuchsergebnisse zur Erzeugung von NITROX mit 36 % Sauerstoffgehalt und Fig. 8 zeigt Versuchsergebnisse zur Erzeugung von NITROX mit einem Sauerstoffgehalt von 40 %.

Besonders dramatisch war der Vorteil der erfindungsgemäßen Vorrichtung gegenüber der Referenzvorrichtung bei der Versuchsdurchführung zur Erzeugung von NITROX mit einem Sauerstoffgehalt von 40 % bei einer Eintrittstemperatur am Eintritt der selektiven Membran 13 von 40°C. Es zeigt sich, dass der Luftverbrauch der Referenzvorrichtung ab einer gewissen Auslastung nahezu exponentiell angestiegen ist, währen der Luftverbrauch der erfindungsgemäßen Vorrichtung nur geringfügig angestiegen ist.

Es zeigte sich daher überraschend, dass mit der erfindungsgemäßen Vorrichtung der Wirkungsgrad deutlich erhöht werden kann, da der Luftverbrauch am Eintritt 21 bei 35-40°C ± 2K, optimal bei 40°C ± 2K Eintrittstemperatur an der Membran 13 bei vorgegebenen Liefermengen an NITROX mit der erfindungsgemäßen Vorrichtung des ersten Ausführungsbeispiels deutlich geringer als bei der Referenzanlage ist, die nicht dem vorstehend diskutieren Aufbau folgt.

Die erfindungsgemäße Vorrichtung hat noch weitere Vorteile wie im Folgenden beschrieben wird.

Die Filterkaskade mit den Filterelementen 6, 7, 8 ist in Strömungsrichtung vor dem Druckminderer 9 angeordnet. Somit wird die zu filternde Luft unter Druck gefiltert, so dass die Strömungsgeschwindigkeit innerhalb der jeweiligen Filterelemente verringert ist. Dies ist dann besonders vorteilhaft, wenn ein Filterelement mit Aktivkohle, insbesondere einer Aktivkohleschüttung verwendet werden soll, da Aktivkohlefilter besonders empfindlich auf hohe Strömungsgeschwindigkeiten sind. Somit kann ein kleineres Filterelement verwendet werden, da der Volumenstrom aufgrund des hohen Drucks verringert ist und wird der Austrag des Filtermaterials verhindert.

Die Druckluftheizung 11 ist in Strömungsrichtung hinter dem Druckminderer 9 angeordnet. Somit wird Luft mit verringertem Druck durch die Druckluftheizung 11 geleitet, so dass hier die Strömungsgeschwindigkeit erhöht ist und dadurch die Wärmeübertragung zwischen dem Heizelement der Druckluftheizung 11 verbessert wird. Somit kann eine Druckluftheizung mit verringerter Abmessung verwendet werden.

Die gesamte Vorrichtung weist eine definierte Betriebsweise auf, die im Stand der Technik bisher nicht möglich war. Insbesondere durch die Kombination der Druckluftheizung 11 mit der zugehörigen Regelung und der vorherigen Trocknung mittels Kältetrockners 4 kann einerseits eine extrem zuverlässige Trocknung und Reinigung der Druckluft vorgenommen werden und andererseits der Betriebspunkt hinsichtlich Druck und Temperatur für die selektive Membran 13 optimal eingerichtet werden. Die Verwendung solcher Vorrichtungen zur Erzeugung von NITROX, welches beispielsweise in Tauchflaschen abgefüllt wird, soll möglichst universell und unabhängig von Umgebungsbedingungen sein. Daher ergibt sich insbesondere mit der Anordnung des zweiten Ausführungsbeispiels, welches zusätzlich den Vorkühler 1 aufweist, eine nahezu vollständige Unabhängigkeit von Umgebungsbedingungen, wie Temperatur und Luftfeuchtigkeit. Ferner kann trotz starker Schwankungen der Umgebungsbedingungen ein definierter Zustand der in die selektive Membran 13 eintretenden Luft sichergestellt werden. Daraus ergibt sich die Erhöhung des Gesamtwirkungsgrads der Vorrichtung bezogen auf die Liefermenge Nitrox und wird gleichzeitig die Lebensdauer der Vorrichtung erhöht.

Ferner ermöglicht die erfindungsgemäße Vorrichtung die Verwendung verschiedener Bauarten der selektiven Membran, da die Reinheitsbedingungen für den Zuverlässigen Betrieb jeder Membranbauart eingehalten werden können und gleichzeitig die Betriebszustände hinsichtlich Temperatur und Druck am Eintritt der Membran genau und unabhängig von den Umgebungsbedingungen eingeregelt werden können.

### ZWEITES AUSFÜHRUNGSBEISPIEL

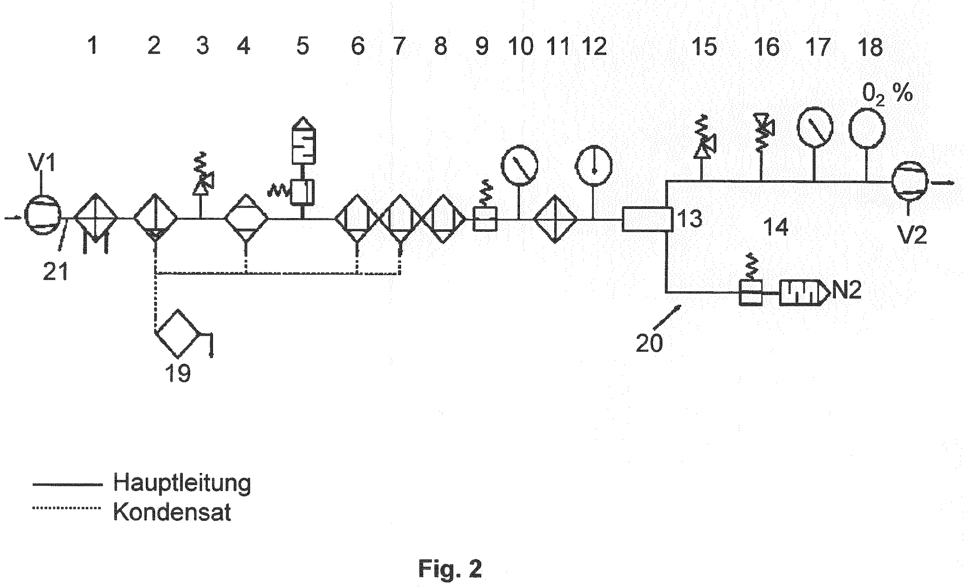

Im Folgenden wird ein zweites Ausführungsbeispiel der Erfindung unter Bezugnahme auf Fig. 2 beschrieben. Das zweite Ausführungsbeispiel unterscheidet sich von dem in Fig. 1 gezeigten Ausführungsbeispiel dahingehend, dass in Strömungsrichtung vor dem Kältetrockner 4 ein Druckluftkühler 1 vorgesehen ist. Insbesondere ist der Druckluftkühler 1 vor dem auch im ersten Ausführungsbeispiel vorgesehenen Filter 2 angeordnet.

Der Druckluftkühler 1 kann als Rohrbündel-Wärmetauscher ausgeführt werden. Der Druckluftkühler 1 hat die Funktion, die in den Eintritt 21 für verdichtete Umgebungsluft eingeführte Luft, die durch den Verdichtungsvorgang in der Regel erhitzt ist, vorzukühlen, so dass die Luft, die in den Kältetrockner 4 eingeleitet wird, bereits vorgekühlt ist.

Somit kann eine Vorrichtung zur Verfügung gestellt werden, die selbst bei sehr hohen Umgebungstemperaturen von bspw. 40-45 °C und Eintrittstemperaturen bis 60 °C funktionsbereit bleibt. Ein Überschreiten des Taupunkts in dem Kältetrockner 4 wird somit weitestgehend vermieden, so dass verdichtete Umgebungsluft mit optimaler Trocknung zu der selektiven Membran 13 zugeführt werden kann, so dass die Funktion und Lebensdauer derselben gewährleistet bleibt. Der Druckluftkühler 1 kann auch in den Kältetrockner 4 integriert werden. Ferner ist es möglich, einen Kühlmittelkreislauf zum Kühlen der durch den Druckluftkühler 1 geführten Luft derart zu gestalten, dass dieser mit dem Kühlmittelkreislauf des Kältetrockners 4 zusammenwirkt.

Mit der Vorrichtung zur Sauerstoffanreicherung des zweiten Ausführungsbeispiels können dieselben Vorteile erzielt werden, die auch mit dem ersten Ausführungsbeispiel erzielbar sind. Insbesondere sind die Ergebnisse der Versuchsreihe, die in den Fig. 3-8 dargestellt sind, weitestgehend übertragbar auf das zweite Ausführungsbeispiel.

## Patentansprüche

1. Vorrichtung zur Sauerstoffanreicherung von Atemluft mit den folgenden Elementen:
- einem Eintritt (21) für verdichtete Umgebungsluft, an den ein Verdichter zur Bereitstellung von verdichteter Umgebungsluft anschließbar ist;
- einem Kältetrockner (4) zur Entfeuchtung der verdichteten Umgebungsluft;
- einer Trennvorrichtung (20) mit einem Eingang (13a) für die verdichtete und entfeuchtete Umgebungsluft, einem ersten Ausgang (13b), der direkt mit dem Eingang in Verbindung steht, und einem zweiten Ausgang (13c), der über eine selektive Membran (13) mit dem Eingang (13a) in Verbindung steht; wobei die Durchlässigkeit der selektiven Membran (13) unter vorbestimmten Bedingungen für Sauerstoff höher als für Stickstoff ist;
wobei im Strömungsverlauf zwischen dem Kältetrockner (4) und dem Eingang (13a) der Trennvorrichtung (20) eine Heizvorrichtung (11) zum Aufheizen der verdichteten und entfeuchteten Umgebungsluft vorhanden ist, wobei im Strömungsverlauf zwischen dem Eingang (13a) der Trennvorrichtung (20) und dem Kältetrockner (4), insbesondere im Strömungsverlauf zwischen der Heizvorrichtung (11) und dem Kältetrockner (4), eine Filtereinrichtung (6, 7, 8) zur Reinigung der verdichteten und entfeuchteten Umgebungsluft vorhanden ist
**dadurch gekennzeichnet, dass**
in der Verbindung zwischen dem Kältetrockner (4) und der Filtereinrichtung (6, 7, 8) eine Abblaseinrichtung (5) vorhanden ist, die bei Überschreiten eines vorbestimmten Drucks öffnet.

2. Vorrichtung zur Sauerstoffanreichung von Atemluft nach Anspruch 1,
wobei im Strömungsverlauf zwischen dem Eintritt (21) für verdichtete Umgebungsluft und dem Kältetrockner (4) eine Vorkühleinrichtung (1) zum Kühlen der verdichteten Umgebungsluft vorgesehen ist.

3. Vorrichtung zur Sauerstoffanreichung von Atemluft nach Anspruch 2,
wobei mit der Vorkühleinrichtung (1) die verdichtete Umgebungsluft unterhalb einer vorbestimmten Grenztemperatur regelbar oder steuerbar ist.

4. Vorrichtung zur Sauerstoffanreichung von Atemluft nach Anspruch 3,
wobei die vorbestimmte Grenztemperatur auf der Grundlage von Betriebsgrößen des Kältetrockners (4) vorgebbar ist.

5. Vorrichtung zur Sauerstoffanreichung von Atemluft nach mindestens einem der Ansprüche 1-4,
wobei mit der Heizvorrichtung (11) die verdichtete und entfeuchtete Umgebungsluft am Eingang (13a) der Trennvorrichtung auf eine vorbestimmte Temperatur oder innerhalb eines vorbestimmten Temperaturbereichs regelbar ist.

6. Vorrichtung zur Sauerstoffanreichung von Atemluft nach Anspruch 5,
wobei der vorbestimmte Temperaturbereich 20-50°C, vorzugsweise 40°C ± 2K beträgt.

7. Vorrichtung zur Sauerstoffanreichung von Atemluft nach mindestens einem der vorhergehenden Ansprüche,
wobei die Heizvorrichtung (11) elektrisch betreibbar ist.

8. Vorrichtung zur Sauerstoffanreichung von Atemluft nach mindestens einem der vorhergehenden Ansprüche,
wobei die Heizvorrichtung (11) unter Nutzung der Abwärme des Kältetrockners (4) betreibbar ist.

9. Vorrichtung zur Sauerstoffanreichung von Atemluft nach mindestens einem der Ansprüche 2-8,
wobei die Vorkühleinrichtung (1) als Luft-/Wasser-Wärmetauscher, insbesondere als Luft-/Wasser-Rohrbündelwärmetauscher ausgebildet ist.

10. Vorrichtung zur Sauerstoffanreichung von Atemluft nach Anspruch 1,
wobei die Filtereinrichtung (6, 7, 8) mehrere Filtereinheiten umfasst, die im Strömungsverlauf in Reihe angeordnet sind.

11. Vorrichtung zur Sauerstoffanreichung von Atemluft nach Anspruch 1 oder 10,
wobei die Filtereinrichtung (6, 7, 8) mindestens eine Filtereinheit (8) aufweist, die Aktivkohle, vorzugsweise eine Aktivkohleschüttung enthält, durch die die verdichtete und entfeuchtete Umgebungsluft einer Reinigung unterzogen werden kann.

12. Vorrichtung zur Sauerstoffanreichung von Atemluft nach mindestens einem der Ansprüche 1, 10 und 11,
wobei eine Druckeinstellvorrichtung (9), mit der der Druck am Eingang (13a) der Trennvorrichtung (20) einstellbar, insbesondere begrenzbar ist, im Strömungsverlauf hinter der Filtereinrichtung (6, 7, 8) vorgesehen ist.

13. Vorrichtung zur Sauerstoffanreichung von Atemluft nach Anspruch 12,
wobei die Druckeinstellvorrichtung (9) zwischen der Filtereinrichtung (6, 7, 8) und der Heizvorrichtung (11) vorgesehen ist.

14. Vorrichtung zur Sauerstoffanreichung von Atemluft nach mindestens einem der vorhergehenden Ansprüche,
ferner mit einer Befüllvorrichtung (22) zur Befüllung von Atemluftbehältern, insbesondere Tauchflaschen, mit der sauerstoffangereicherten Atemluft unter Druck.

15. Vorrichtung zur Sauerstoffanreichung von Atemluft nach mindestens einem der vorhergehenden Ansprüche, wobei die Vorrichtung modular als Einheit aufgebaut ist, an die der Verdichter zur Bereitstellung von verdichteter Umgebungsluft anschließbar ist.

16. Vorrichtung zur Sauerstoffanreichung von Atemluft nach Anspruch 15, wobei die Einheit in einem Gehäuse untergebracht ist.

17. Vorrichtung zur Sauerstoffanreichung von Atemluft nach mindestens einem der vorhergehenden Ansprüche, ferner mit einem Verdichter zur Bereitstellung von verdichteter Umgebungsluft der an den Eintritt (21) für verdichtete Umgebungsluft der Vorrichtung anschließbar ist.

18. Verfahren zum Bereitstellen sauerstoffangereicherter Atemluft unter Verwendung einer Vorrichtung nach einem der Ansprüche 1-17 mit den folgenden Schritten:
- Bereitstellen von verdichteter Umgebungsluft;
- Entfeuchten der verdichteten Umgebungsluft;
- Einleiten der verdichteten und entfeuchteten Umgebungsluft in eine Trennvorrichtung (20), die mit einer selektiven Membran (13) versehen ist;
- Ableiten von sauerstoffangereicherter Atemluft aus der Trennvorrichtung (20), **gekennzeichnet durch**
Vorheizen der entfeuchteten und verdichteten Umgebungsluft vor dem Einleiten in die Trennvorrichtung (20).

19. Verfahren zum Bereitstellen sauerstoffangereicherter Atemluft nach Anspruch 18, wobei die verdichtete Umgebungsluft vor dem Entfeuchten mit einem Vorkühler (1) vorgekühlt wird.

20. Verfahren zum Bereitstellen sauerstoffangereicherter Atemluft nach Anspruch 19, wobei das Entfeuchten durch einen Kältetrockner (4) vorgenommen wird.

21. Verfahren zum Bereitstellen sauerstoffangereicherter Atemluft nach einem der Ansprüche 18-20,
wobei vor dem Einleiten der verdichteten und entfeuchteten Umgebungsluft in die Trennvorrichtung (20) die verdichtete und entfeuchtete Umgebungsluft filtriert wird.

22. Verfahren zum Bereitstellen sauerstoffangereicherter Atemluft nach Anspruch 21, wobei nach dem Filtrieren und vor dem Vorheizen ein Schritt zur Druckverringerung der verdichteten und entfeuchteten Umgebungsluft durchgeführt wird.

23. Verfahren zum Bereitstellen sauerstoffangereicherter Atemluft nach mindestens einem der Ansprüche 18-22,
ferner umfassend Befüllen von Atemluftbehältern, insbesondere Tauchflaschen, mit der abgeleiteten sauerstoffangereicherten Atemluft unter Druck.

## Claims

1. Device for oxygen enrichment of respiratory air, with the following elements:
- an entry point (21) for compressed ambient air, to which a compressor for providing compressed ambient air can be attached;
- a cooling dryer (4) for dehumidifying the compressed ambient air;
- a separator device (20) with an inlet (13a) for the compressed and dehumidified ambient air, a first outlet (13b) connected directly to the inlet, and a second outlet (13c) connected to the inlet (13a) via a selective membrane (13); wherein the permeability of the selective membrane (13) is, under predetermined conditions, higher for oxygen than for nitrogen;
wherein a heating device (11) for heating the compressed and dehumidified ambient air is present in the flow path between the cooling dryer (4) and the inlet (13a) of the separator device (20), wherein a filter device (6, 7, 8) for cleaning the compressed and dehumidified ambient air is present in the flow path between the inlet (13a) of the separator device (20) and the cooling dryer (4), in particular in the flow path between the heating device (11) and the cooling dryer (4),
**characterized in that**
a blow-off device (5) is present in the connection between the cooling dryer (4) and the filter device (6, 7, 8) and opens when a predetermined pressure is exceeded.

2. Device for oxygen enrichment of respiratory air according to Claim 1, wherein a pre-cooling device (1) for cooling the compressed ambient air is provided in the flow path between the entry point (21) for compressed ambient air and the cooling dryer (4).

3. Device for oxygen enrichment of respiratory air according to Claim 2, wherein the compressed ambient air can be regulated or controlled below a predetermined limit temperature with the pre-cooling device (1).

4. Device for oxygen enrichment of respiratory air according to Claim 3, wherein the predetermined limit temperature can be predefined on the basis of operating variables of the cooling dryer (4).

5. Device for oxygen enrichment of respiratory air according to at least one of Claims 1-4, wherein the compressed and dehumidified ambient air at the inlet (13a) of the separator device can be regulated to a predetermined temperature or within a predetermined temperature range with the heating device (11).

6. Device for oxygen enrichment of respiratory air according to Claim 5, wherein the predetermined temperature range is 20-50°C, preferably 40°C ± 2K.

7. Device for oxygen enrichment of respiratory air according to at least one of the preceding claims, wherein the heating device (11) can be operated electrically.

8. Device for oxygen enrichment of respiratory air according to at least one of the preceding claims, wherein the heating device (11) can be operated using the waste heat from the cooling dryer (4).

9. Device for oxygen enrichment of respiratory air according to at least one of Claims 2-8, wherein the pre-cooling device (1) is designed as an air/water heat exchanger, in particular as an air/water tube-bundle heat exchanger.

10. Device for oxygen enrichment of respiratory air according to Claim 1, wherein the filter device (6, 7, 8) comprises a plurality of filter units, which are arranged in series in the flow path.

11. Device for oxygen enrichment of respiratory air according to Claim 1 or 10, wherein the filter device (6, 7, 8) has at least one filter unit (8) which contains activated carbon, preferably an activated carbon bed, through which the compressed and dehumidified ambient air can be cleaned.

12. Device for oxygen enrichment of respiratory air according to at least one of Claims 1, 10 and 11, wherein a pressure-adjusting device (9), with which the pressure at the inlet (13a) of the separator device (20) can be adjusted, in particular limited, is provided in the flow path downstream from the filter device (6, 7, 8).

13. Device for oxygen enrichment of respiratory air according to Claim 12, wherein the pressure-adjusting device (9) is provided between the filter device (6, 7, 8) and the heating device (11) .

14. Device for oxygen enrichment of respiratory air according to at least one of the preceding claims, moreover with a filling device (22) for filling respiratory air containers, in particular dive tanks, with the oxygen-enriched respiratory air under pressure.

15. Device for oxygen enrichment of respiratory air according to at least one of the preceding claims, wherein the device is constructed as a modular unit to which the compressor for providing compressed ambient air can be attached.

16. Device for oxygen enrichment of respiratory air according to Claim 15, wherein the unit is accommodated in a housing.

17. Device for oxygen enrichment of respiratory air according to at least one of the preceding claims, moreover with a compressor for providing compressed ambient air that can be attached to the entry point (21) for compressed ambient air of the device.

18. Method for providing oxygen-enriched respiratory air using a device according to one of Claims 1-17, with the following steps:
- providing compressed ambient air;
- dehumidifying the compressed ambient air;
- introducing the compressed and dehumidified ambient air into a separator device (20), which is provided with a selective membrane (13);
- withdrawing oxygen-enriched respiratory air from the separator device (20),
**characterized by**
pre-heating the dehumidified and compressed ambient air before it is introduced into the separator device (20).

19. Method for providing oxygen-enriched respiratory air according to Claim 18, wherein the compressed ambient air is pre-cooled by a pre-cooler (1) before being dehumidified.

20. Method for providing oxygen-enriched respiratory air according to Claim 19, wherein the dehumidifying is carried out by a cooling dryer (4) .

21. Method for providing oxygen-enriched respiratory air according to one of Claims 18-20, wherein the compressed and dehumidified ambient air is filtered before the compressed and dehumidified ambient air is introduced into the separator device (20).

22. Method for providing oxygen-enriched respiratory air according to Claim 21, wherein a step in which the pressure of the compressed and dehumidified ambient air is reduced is carried out after the filtering and before the pre-heating.

23. Method for providing oxygen-enriched respiratory air according to at least one of Claims 18-22, moreover comprising filling respiratory air containers, in particular dive tanks, with the withdrawn oxygen-enriched respiratory air under pressure.

## Revendications

1. Dispositif d'enrichissement en oxygène de l'air inhalé, comportant les éléments suivants:
- une entrée (21) pour de l'air ambiant comprimé, à laquelle un compresseur peut être raccordé pour fournir de l'air ambiant comprimé;
- un sécheur cryogénique (4) pour la déshumidification de l'air ambiant comprimé;
- un dispositif de séparation (20) avec une entrée (13a) pour l'air ambiant comprimé et déshumidifié, une première sortie (13b), qui communique directement avec l'entrée, et une deuxième sortie (13c), qui communique avec l'entrée (13a) par l'intermédiaire d'une membrane sélective (13); dans lequel la perméabilité de la membrane sélective (13) dans des conditions prédéterminées est plus élevée pour l'oxygène que pour l'azote;
dans lequel il se trouve dans le chemin d'écoulement entre le sécheur cryogénique (4) et l'entrée (13a) du dispositif de séparation (20) un dispositif de chauffage (11) pour le chauffage de l'air ambiant comprimé et déshumidifié, dans lequel il se trouve dans le chemin d'écoulement entre l'entrée (13a) du dispositif de séparation (20) et le sécheur cryogénique (4), en particulier dans le chemin d'écoulement entre le dispositif de chauffage (11) et le sécheur cryogénique (4), un dispositif de filtre (6, 7, 8) pour la purification de l'air ambiant comprimé et déshumidifié,
**caractérisé en ce qu'**il se trouve dans la liaison entre le sécheur cryogénique (4) et le dispositif de filtre (6, 7, 8) un dispositif d'échappement (5), qui s'ouvre en cas de dépassement d'une pression prédéterminée.

2. Dispositif d'enrichissement en oxygène de l'air inhalé selon la revendication 1, dans lequel il est prévu dans le chemin d'écoulement entre l'entrée (21) pour l'air ambiant comprimé et le sécheur cryogénique (4) un dispositif de pré-refroidissement (1) pour le refroidissement de l'air ambiant comprimé.

3. Dispositif d'enrichissement en oxygène de l'air inhalé selon la revendication 2, dans lequel l'air ambiant comprimé peut être réglé ou commandé avec le dispositif de pré-refroidissement (1) en dessous d'une température limite prédéterminée.

4. Dispositif d'enrichissement en oxygène de l'air inhalé selon la revendication 3, dans lequel la température limite prédéterminée peut être prédéfinie sur la base de grandeurs de fonctionnement du sécheur cryogénique (4).

5. Dispositif d'enrichissement en oxygène de l'air inhalé selon au moins une des revendications 1 à 4, dans lequel l'air ambiant comprimé et déshumidifié à l'entrée (13a) du dispositif de séparation peut être réglé avec le dispositif de chauffage (11) à une température prédéterminée ou à l'intérieur d'une plage de température prédéterminée.

6. Dispositif d'enrichissement en oxygène de l'air inhalé selon la revendication 5, dans lequel la plage de température prédéterminée vaut 20-25°C, de préférence 40°C ± 2K.

7. Dispositif d'enrichissement en oxygène de l'air inhalé selon au moins une des revendications précédentes, dans lequel le dispositif de chauffage (11) peut fonctionner à l'électricité.

8. Dispositif d'enrichissement en oxygène de l'air inhalé selon au moins une des revendications précédentes, dans lequel le dispositif de chauffage (11) peut fonctionner en utilisant la chaleur rejetée du sécheur cryogénique (4).

9. Dispositif d'enrichissement en oxygène de l'air inhalé selon au moins une des revendications 2 à 8, dans lequel le dispositif de pré-refroidissement (1) est réalisé sous forme d'échangeur de chaleur air/eau, en particulier d'échangeur de chaleur air/eau à faisceau de tubes.

10. Dispositif d'enrichissement en oxygène de l'air inhalé selon la revendication 1, dans lequel le dispositif de filtre (6, 7, 8) comprend plusieurs unités de filtre, qui sont disposées en série dans le chemin d'écoulement.

11. Dispositif d'enrichissement en oxygène de l'air inhalé selon la revendication 1 ou 10, dans lequel le dispositif de filtre (6, 7, 8) présente au moins une unité de filtre (8), qui contient du charbon actif, de préférence un lit de charbon actif, à travers lequel l'air ambiant comprimé et déshumidifié peut être soumis à une purification.

12. Dispositif d'enrichissement en oxygène de l'air inhalé selon au moins une des revendications 1, 10 ou 11, dans lequel il est prévu un dispositif de réglage de la pression (9), avec lequel la pression à l'entrée (13a) du dispositif de séparation (20) peut être réglée, en particulier limitée, après le dispositif de filtre (6, 7, 8) dans le chemin d'écoulement.

13. Dispositif d'enrichissement en oxygène de l'air inhalé selon la revendication 12, dans lequel le dispositif de réglage de la pression (9) est prévu entre le dispositif de filtre (6, 7, 8) et le dispositif de chauffage (11).

14. Dispositif d'enrichissement en oxygène de l'air inhalé selon au moins une des revendications précédentes, comportant en outre un dispositif de remplissage (22) pour le remplissage de réservoirs d'air inhalé, en particulier de bouteilles de plongée, avec l'air inhalé enrichi en oxygène sous pression.

15. Dispositif d'enrichissement en oxygène de l'air inhalé selon au moins une des revendications précédentes, dans lequel le dispositif est construit sous forme modulaire en tant qu'unité, à laquelle le compresseur peut être raccordé pour la préparation d'air ambiant comprimé.

16. Dispositif d'enrichissement en oxygène de l'air inhalé selon la revendication 15, dans lequel l'unité est installée dans un boîtier.

17. Dispositif d'enrichissement en oxygène de l'air inhalé selon au moins une des revendications précédentes, comportant en outre un compresseur pour la préparation d'air ambiant comprimé, qui peut être raccordé à l'entrée (21) pour de l'air ambiant comprimé du dispositif.

18. Procédé de préparation d'air inhalé enrichi en oxygène en utilisant un dispositif selon au moins une des revendications 1 à 17, comportant les étapes suivantes:
- préparation d'air ambiant comprimé;
- déshumidification de l'air ambiant comprimé;
- introduction de l'air ambiant comprimé et déshumidifié dans un dispositif de séparation (20), qui est muni d'une membrane sélective (13);
- évacuation d'air inhalé enrichi en oxygène hors du dispositif de séparation (20),
**caractérisé par** le préchauffage de l'air ambiant comprimé et déshumidifié avant son introduction dans le dispositif de séparation (20).

19. Procédé de préparation d'air inhalé enrichi en oxygène selon la revendication 18, dans lequel on prérefroidit l'air ambiant comprimé avant la déshumidification avec un pré-refroidisseur (1).

20. Procédé de préparation d'air inhalé enrichi en oxygène selon la revendication 19, dans lequel on effectue la déshumidification au moyen d'un sécheur cryogénique (4).

21. Procédé de préparation d'air inhalé enrichi en oxygène selon une des revendications 18 à 20, dans lequel on filtre l'air ambiant comprimé et déshumidifié avant l'introduction de l'air ambiant comprimé et déshumidifié dans le dispositif de séparation (20).

22. Procédé de préparation d'air inhalé enrichi en oxygène selon la revendication 21, dans lequel on effectue, après le filtrage et avant le préchauffage, une étape de diminution de la pression de l'air ambiant comprimé et déshumidifié.

23. Procédé de préparation d'air inhalé enrichi en oxygène selon au moins une des revendications 18 à 22, comprenant en outre le remplissage de réservoirs d'air inhalé, en particulier de bouteilles de plongée, avec l'air inhalé enrichi en oxygène sous pression évacué.
